# EUROPÄISCHE PATENTSCHRIFT

(11) **EP 3 354 488 B1**
(45) Veröffentlichungstag und Bekanntmachung des Hinweises auf die Patenterteilung: **29.04.2020**
(21) Anmeldenummer: 18152063.6
(22) Anmeldetag: 17.01.2018
(51) Int. Cl.: B60C 23/00

(54) **REIFENDRUCKREGULIERUNGSANLAGE**
TYRE PRESSURE REGULATING INSTALLATION
INSTALLATION DE RÉGLAGE DE PRESSION DES PNEUS

(30) Priorität: 31.01.2017 DE 102017000842
(43) Veröffentlichungstag der Anmeldung: 01.08.2018
(73) Patentinhaber: WABCO GmbH, 30453 Hannover (DE)
(72) Erfinder: Haverkamp, Michael, 30455 Hannover (DE); Sabelhaus, Dennis, 30163 Hannover (DE); Stellmacher, Thomas, 31655 Stadthagen (DE)

(56) Entgegenhaltungen:
- EP-B1- 0 365 953
- WO-A1-2014/075154
- WO-A1-2016/094633
- DE-A1-102015 004 366

## Beschreibung

Die Erfindung betrifft eine Reifendruckregulierungsanlage, mittels der die Reifendrücke der Fahrzeugräder mehrerer Fahrzeugachsen eines luftbereiften Kraftfahrzeugs, vorzugsweise einer Offroad-Arbeitsmaschine, während der Fahrt verstellbar sind, nämlich gemäß den Merkmalen des Anspruchs 1.

Selbstfahrende Arbeitsmaschinen, wie zum Beispiel Ackerschlepper und Erntemaschinen, die für einen Offroad-Einsatz vorgesehen sind und auf dem Weg zu und von den Einsatzorten längere Strecken mit relativ hoher Fahrgeschwindigkeit auf öffentlichen Straßen zurücklegen müssen, sind zweckmäßig mit einer Reifendruckregulierungsanlage versehen, mittels der die Reifendrücke der Fahrzeugräder verstellbar sind, also bedarfsweise erhöht oder abgesenkt werden können. Während die Fahrt auf befestigten Straßen zur Erzielung eines niedrigen Rollwiderstands und einer guten Haftung der Fahrzeugreifen auf der Fahrbahn eine durch einen erhöhten Reifendruck bewirkte kleine Aufstandsfläche der Fahrzeugreifen erfordert, ist für den Offroad-Einsatz, beispielsweise bei der Feldarbeit auf dem Acker oder bei der Holzernte im Wald, ein möglichst niedriger Reifendruck vorteilhaft. Durch diesen wird aufgrund der vergrößerten Aufstandsfläche der Fahrzeugreifen ein Einsacken der Fahrzeugräder im weichen Boden sowie eine unerwünschte Verdichtung des Bodens verhindert sowie die Traktion der angetriebenen Fahrzeugräder erhöht.

Da separate Druckluftquellen mit ausreichendem Druckluftvorrat üblicherweise weder stationär noch mobil zu Verfügung stehen, sind moderne Offroad-Arbeitsmaschinen zunehmend mit einer Reifendruckregulierungsanlage versehen, die zur Vermeidung von langen Fahr- oder Arbeitspausen bevorzugt derart ausgebildet ist, dass die Reifendrücke der Fahrzeugräder während der Fahrt einstellbar sind. Besonders moderne Ackerschlepper sind häufig mit einer Druckluft-Bremsanlage ausgerüstet, so dass die Reifendruckregulierungsanlage in diesem Fall als Druckluftquelle vorteilhaft die vorhandene Druckluftversorgungsanlage der Bremsanlage nutzen kann.

In der EP 1 931 525 B1 ist eine Reifendruckregulierungsanlage eines zweiachsigen Kraftfahrzeugs beschrieben, bei der zwei Achsverbindungsleitungen über jeweils ein elektromagnetisch schaltbares Umschaltventil wechselweise mit einer Ablassleitung oder mit einer an eine Druckluftquelle angeschlossenen Fülldruckleitung verbindbar sind. Die Ablassleitung ist über ein weiteres elektromagnetisch schaltbares Umschaltventil wechselweise mit einer über ein Rückschlagventil mit der Druckluftquelle verbundenen Rückführleitung oder mit einer über einen Schalldämpfer in die Umgebung führenden Entlüftungsleitung verbindbar. Die Achsverbindungsleitungen sind jeweils in zwei äußere Radverbindungsleitungen verzweigt, die jeweils über eine pneumatische Drehkupplung an ein pneumatisch schaltbares Radventil des zugeordneten Fahrzeugrades geführt sind. Über die Radventile sind jeweils in den Innenraum des betreffenden Radreifens führende innere Radverbindungsleitungen wechselweise mit der zugeordneten äußeren Radverbindungsleitung verbindbar oder gegenüber dieser absperrbar. Jedem Radventil ist ein elektromagnetisch schaltbares Vorsteuerventil zugeordnet, über das eine Radsteuerleitung des zugeordneten Fahrzeugrades wechselweise mit einer über einen Schalldämpfer in die Umgebung führenden Entlüftungsleitung oder mit einer an die Fülldruckleitung angeschlossenen Steuerdruckleitung verbindbar ist. Die Radsteuerleitungen sind über jeweils eine pneumatische Drehkupplung an die Steuereingänge der zugeordneten Radsteuerventile geführt.

Aus der EP 0 365 953 B1, der WO 2016/094633 A1 und der WO 2014/075154 A1 sind weitere Reifendruckregelanlagen bekannt.

Aus der DE 10 2015 004 366 A1 sind mehrere Ausführungen einer Reifendruckregulierungsanlage eines zweiachsigen Kraftfahrzeugs bekannt, bei der zwei Hauptverbindungsleitungen über mindestens ein elektromagnetisch schaltbares Umschaltventil wechselweise mit einer über einen Schalldämpfer in die Umgebung führenden Entlüftungsleitung oder mit einer über ein Druckbegrenzungsventil an eine Druckluftquelle angeschlossenen Fülldruckleitung verbindbar sind. Jeder Fahrzeugachse ist eine Achsverbindungsleitung zugeordnet, die über ein elektromagnetisch schaltbares Achsventil mit der zugeordneten Hauptverbindungsleitung verbindbar oder gegenüber dieser absperrbar ist. Jede Achsverbindungsleitung ist in zwei äußere Radverbindungsleitungen verzweigt, die jeweils über einen pneumatischen Verbindungskanal einer zweikanaligen Drehkupplung an ein hydraulisch schaltbares Radventil des zugeordneten Fahrzeugrades geführt sind. Über die Radventile sind jeweils in den Innenraum des betreffenden Radreifens führende innere Radverbindungsleitungen wechselweise mit der zugeordneten äußeren Radverbindungsleitung verbindbar oder gegenüber dieser absperrbar. Den Radventilen ist ein gemeinsames elektromagnetisch schaltbares Vorsteuerventil zugeordnet, über das der pneumatische Eingang eines pneumatisch-hydraulischen Druckwandlers, an dessen hydraulischen Ausgang die Radsteuerleitungen der Fahrzeugräder angeschlossen sind, wechselweise mit einem Entlüftungsausgang oder mit einer an die Fülldruckleitung angeschlossenen Steuerdruckleitung verbindbar ist. Die Radsteuerleitungen sind jeweils über einen hydraulischen Verbindungskanal der zweikanaligen Drehkupplung an den Steuereingang des zugeordneten Radsteuerventils geführt.

Bei den genannten Reifendruckregulierungsanlagen werden die Steuerungsventile von einem elektronischen Steuergerät (ECU) entweder unmittelbar oder über ein Vorsteuerventil mittelbar elektrisch angesteuert. Demzufolge sind die Sicherheitsanforderungen an die Elektronik des elektrischen Steuergerätes gemäß der Norm ISO 25119 entsprechend hoch, um die Funktionssicherheit der jeweiligen Reifendruckregulierungsanlage zu gewährleisten, insbesondere um eine Fehlfunktion eines der Steuerventile aufgrund eines Elektronikdefektes in dem elektronischen Steuergerät zu vermeiden.

Der vorliegenden Erfindung liegt daher die Aufgabe zu Grunde, eine Reifendruckregulierungsanlage eines luftbereiften Kraftfahrzeugs der eingangs genannten Art vorzuschlagen, die gegenüber den bekannten Reifendruckregulierungsanlagen eine erhöhte Funktionssicherheit aufweist.

Die erfindungsgemäße Reifendruckregulierungseinrichtung, mittels der die Reifendrücke der Fahrzeugräder mehrerer Fahrzeugachsen eines luftbereiften Kraftfahrzeugs während der Fahrt verstellbar sind, weist die folgenden Merkmale auf:
- mindestens ein elektromagnetisch schaltbares Umschaltventil,
   über das mindestens eine zu einem Achsventil einer Fahrzeugachse führende Hauptverbindungsleitung wechselweise mit einer in die Umgebung führenden Entlüftungsleitung oder mit einer über ein Druckbegrenzungsventil an eine Druckluftquelle angeschlossenen Fülldruckleitung verbindbar ist,
- ein jeder der Fahrzeugachsen zugeordnetes, elektromagnetisch schaltbares Achsventil, über das jeweils eine in äußere Radverbindungsleitungen der betreffenden Fahrzeugachse verzweigte Achsverbindungsleitung wechselweise mit der zugeordneten Hauptverbindungsleitung verbindbar oder gegenüber dieser absperrbar ist,
- ein an jedem Fahrzeugrad angeordnetes Radventil, über das eine in den Innenraum des betreffenden Radreifens führende innere Radverbindungsleitung wechselweise mit der zugeordneten äußeren Radverbindungsleitung verbindbar oder gegenüber dieser absperrbar ist,
- zwischen den Fahrzeugachsen und den zugeordneten Fahrzeugrädern angeordnete zweikanalige Drehkupplungen mit jeweils einer Arbeitsverbindung zur Übertragung von Druckluft zwischen den fahrzeugrahmenseitigen und den radseitigen Abschnitten der äußeren Radverbindungsleitungen sowie mit einer Steuerverbindung zur Übertragung von Steuersignalen an die Radventile zwischen fahrzeugrahmenseitigen und radseitigen Abschnitten zugeordneter Radsteuerleitungen, und
- eine Ventilanordnung, mittels der eine vollständige Druckabsenkung des Luftdruckes in den Radreifen der Fahrzeugräder über das Umschaltventil, die Achsventile und die Radventile selbsttätig verhindert wird, wobei die Ventilanordnung jeweils ein in jeder der Achsverbindungsleitungen angeordnetes Druckhalteventil umfasst, über das der Luftdruck in dem jeweiligen achsseitigen Abschnitt der betreffenden Achsverbindungsleitung selbsttätig auf einem vorgebbaren Mindestdruck gehalten wird, oder
   dass die Ventilanordnung ein in der Entlüftungsleitung angeordnetes Druckhalteventil umfasst, über das der Luftdruck in dem inneren Abschnitt der Entlüftungsleitung selbsttätig auf einem vorgebbaren Mindestdruck gehalten wird.

In der unbetätigten, also stromlosen Ruhestellung des mindestens einen Umschaltventils sind die angeschlossenen Hauptverbindungsleitungen üblicherweise mit der in die Umgebung führenden, zumeist drucklosen Entlüftungsleitung verbunden, so dass der Reifendruck der Fahrzeugräder dann abgesenkt werden kann. In der betätigten, also bestromten Schaltstellung des Umschaltventils sind die angeschlossenen Hauptverbindungsleitungen mit der an die Druckluftquelle angeschlossenen, druckführenden Fülldruckleitung verbunden, wodurch der Reifendruck der Fahrzeugräder erhöht werden kann.

Zum Befüllen und Entlüften der Radreifen ist auch das Öffnen der Achsventile und der Radventile erforderlich. Hierzu werden die Achsventile derjenigen Fahrzeugachsen, deren Radreifen befüllt oder entlüftet werden sollen, durch die Betätigung, also Bestromung der betreffenden Achsventile geöffnet und damit die betreffenden Achsverbindungsleitungen mit der Hauptverbindungsleitung verbunden. Die Achsventile derjenigen Fahrzeugachsen, bei denen die Reifendrücke unverändert bleiben sollen, verbleiben in ihrer unbetätigten, also stromlosen Ruhestellung, in der die betreffenden Achsverbindungsleitungen gegenüber der Hauptverbindungsleitung abgesperrt sind. Durch die Betätigung der Radventile, demnach deren Umschalten in die geöffnete Schaltstellung, werden die inneren Radverbindungsleitungen mit den äußeren Radverbindungsleitungen verbunden, wodurch die Radreifen der Fahrzeugräder derjenigen Fahrzeugachsen, deren Achssteuerventil geöffnet ist, abhängig von der Schaltstellung des Umschaltventils befüllt oder entlüftet werden.

Nach dem Befüllen oder Entlüften von Radreifen werden die Radventile wieder in ihre geschlossene Ruhestellung umgeschaltet. Nach einer Erhöhung des Reifendrucks werden die von dem mindestens einen Umschaltventil zu den Radventilen verlaufenden Hauptverbindungsleitungen zunächst durch das Umschalten des Umschaltventils in seine Ruhestellung entlüftet, bevor die Achsventile geschlossen werden. Nach einem Absenken des Reifendrucks können die Achsventile dagegen sofort geschlossen werden. Durch die Druckentlastung der Radsteuerleitungen und der äußeren Radverbindungsleitungen außerhalb von Stellvorgängen wird ein dauerhaftes Andrücken der vorzugsweise aufblasbaren Dichtungen an die zugeordneten Dichtflächen in den Drehkupplungen vermieden und damit die Abnutzung dieser Dichtungen stark reduziert.

Schon durch den getrennten Aufbau der Verbindungs- und Steuerleitungswege sowie die Aufteilung der Umschalt- und Absperrfunktionen in den Verbindungsleitungen in separate Steuerventile weist die erfindungsgemäße Reifendruckregulierungsanlage eine verbesserte Steuerbarkeit in Verbindung mit einer hohen Funktionssicherheit auf.

Da das mindestens eine Umschaltventil, die Achsventile unmittelbar und die Radventile zumindest mittelbar elektrisch von einem elektronischen Steuergerät angesteuert werden, kann ein Defekt in dem elektronischen Steuergerät ohne weitere Vorkehrungen zu einem ungewollten Umschalten mindestens eines Achsventils sowie der Radventile und damit zu einem vollständigen Druckverlust in den Radreifen der Fahrzeugräder mindestens einer Fahrzeugachse führen. Um dies zu verhindern, ist erfindungsgemäß eine Ventilanordnung vorgesehen, mittels der eine vollständige Druckabsenkung des Luftdruckes in den Radreifen der Fahrzeugräder über das Umschaltventil, die Achsventile und die Radventile selbsttätig verhindert wird. Wenn es nun zu einem Defekt in dem elektronischen Steuergerät kommt, der zu einem ungewollten Umschalten mindestens eines Achsventils und der Radventile führt, kann der Luftdruck in den betroffenen Radreifen maximal bis auf einen vorgegebenen Mindestdruck absinken. Dadurch ist die Funktionssicherheit der erfindungsgemäßen Druckluftversorgungsanlage deutlich erhöht, und die Sicherheitsanforderungen an das elektronische Steuergerät gemäß der Norm ISO 25119 sind entsprechend niedriger, was mit Kostenvorteilen verbunden ist.

Die Ventilanordnung umfasst jeweils ein in jeder der Achsverbindungsleitungen angeordnetes Druckhalteventil, über das der Luftdruck in dem jeweiligen achsseitigen Abschnitt der betreffenden Achsverbindungsleitung und damit auch in den angeschlossenen äußeren und inneren Radverbindungsleitungen selbsttätig auf einem vorgebbaren Mindestdruck gehalten wird. Ein Druckhalteventil ist ein Absperrventil, das bei Erreichen oder Unterschreiten eines eingestellten Mindestdruckes an dem inneren Anschluss selbsttätig schließt.

Alternativ dazu kann die Ventilanordnung auch ein einziges in der Entlüftungsleitung angeordnetes Druckhalteventil umfassen, über das der Luftdruck in dem inneren Abschnitt der Entlüftungsleitung und damit auch in den angeschlossenen Hauptverbindungsleitungen, Achsverbindungsleitungen sowie äußeren und inneren Radverbindungsleitungen selbsttätig auf einem vorgebbaren Mindestdruck gehalten wird.

Die Radventile können als pneumatisch schaltbare 2/2-Wege-Schaltventile ausgebildet sein, denen jeweils eine pneumatische Radsteuerleitung zugeordnet ist, welche über eine pneumatische Steuerverbindung in der jeweiligen Drehkupplung an eine fahrzeugrahmenseitige pneumatische Hauptsteuerleitung geführt ist, die über ein elektromagnetisch schaltbares, als ein 3/2-Wege-Schaltventil ausgebildetes Vorsteuerventil wechselweise mit einem Entlüftungsausgang oder mit der Fülldruckleitung verbindbar ist.

Alternativ dazu ist es jedoch auch möglich, dass die Radventile als elektromagnetisch schaltbare 2/2-Wege-Schaltventile ausgebildet sind, und dass jedem Radventil eine elektrische Radsteuerleitung zugeordnet ist, welche über eine elektrische Steuerverbindung in der jeweiligen Drehkupplung an das elektronische Steuergerät angeschlossen ist.

Besonders dann, wenn die Versorgungsleitung eines Nebenverbraucherkreises als Druckluftquelle dient, ist die Fülldruckleitung vorzugsweise über ein Überströmventil, durch das die Fülldruckleitung bei einem Druckverlust in einer der Achs- oder Radverbindungsleitungen oder in einem der Radreifen der Fahrzeugräder absperrbar ist, an die Druckluftquelle angeschlossen. Somit wird der betreffende Nebenverbraucherkreis bei einem defektbedingten Druckverlust in der Reifendruckregulierungsanlage vorteilhaft weiterhin mit Druckluft versorgt.

Zur Reduzierung des Herstellungs- und Montageaufwands wie auch zum Schutz vor Schmutz, Wasser und äußerer Beschädigung ist es vorteilhaft, wenn das Druckbegrenzungsventil, das mindestens eine Umschaltventil, die Achsventile und die Druckhalteventile beziehungsweise das nur eine Druckhalteventil sowie, sofern vorhanden, das Vorsteuerventil und das Überströmventil in einem vormontierbaren Zentralventil baulich zusammengefasst sind.

Zur Verdeutlichung der Erfindung ist der Beschreibung eine Zeichnung mit Ausführungsbeispielen beigefügt. In dieser zeigt
Fig. 1 eine erste Ausführungsform einer Reifendruckregulierungsanlage gemäß der Erfindung in einer schematischen Ansicht,
Fig. 2 eine zweite Ausführungsform einer Reifendruckregulierungsanlage gemäß der Erfindung in einer schematischen Ansicht,
Fig. 3 eine dritte Ausführungsform einer Reifendruckregulierungsanlage gemäß der Erfindung in einer schematischen Ansicht, und
Fig. 4 eine vierte Ausführungsform einer Reifendruckregulierungsanlage gemäß der Erfindung in einer schematischen Ansicht.

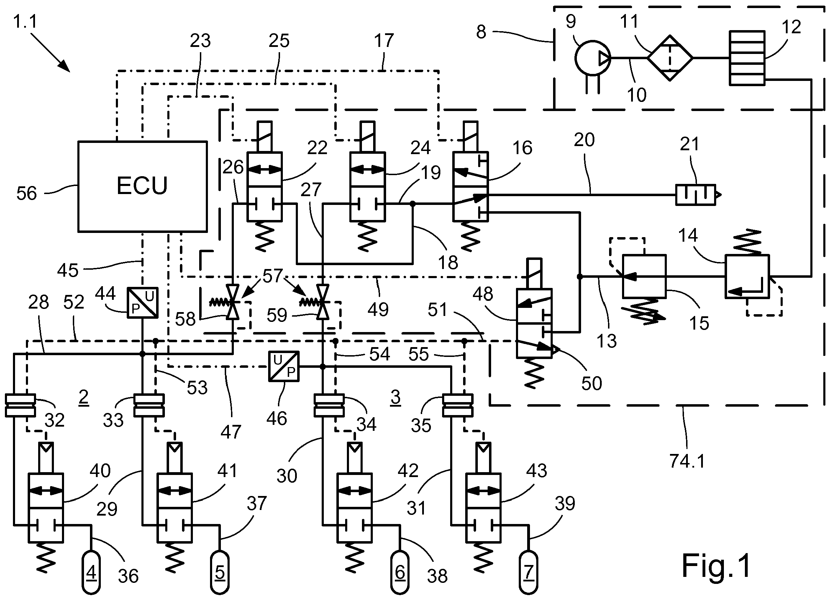

In der schematischen Übersichtsdarstellung der Fig. 1 ist eine erste Ausführungsform einer erfindungsgemäßen Reifendruckregulierungsanlage 1.1 eines beispielhaft zwei Fahrzeugachsen 2, 3 mit jeweils zwei Fahrzeugrädern 4, 5; 6, 7 aufweisenden Kraftfahrzeugs abgebildet.

Die Reifendruckregulierungsanlage 1.1 weist ein Umschaltventil 16, zwei Achsventile 22, 24 sowie ein Vorsteuerventil 48 auf, die zum Beispiel an einem Fahrzeugrahmen des Kraftfahrzeugs angeordnet sein können. Des Weiteren weist die Reifendruckregulierungsanlage 1.1 vier Radventile 40, 41, 42, 43 auf, die jeweils an einem der nicht näher dargestellten Fahrzeugräder 4, 5, 6, 7 der Fahrzeugachsen 2, 3 angeordnet sind. Das Umschaltventil 16 und das Vorsteuerventil 48 sind als elektromagnetisch schaltbare 3/2-Wege-Schaltventile und die beiden Achsventile 22, 24 als elektromagnetisch schaltbare 2/2-Wege-Schaltventile ausgebildet. Die Achsventile 22, 24 sind jeweils einer Fahrzeugachse 2, 3 zugeordnet. So ist das erste Achsventil 22 der Vorderachse 2 zugeordnet, wogegen das zweite Achsventil 24 der Hinterachse 3 zugeordnet ist. Die am Fahrzeugrahmen angeordneten Steuerventile 16, 22, 24, 48 stehen steuerungstechnisch über elektrische Steuerleitungen 17, 23, 25, 49 mit einem elektronischen Steuergerät 56 in Verbindung. Die an den Fahrzeugrädern 4, 5, 6, 7 angeordneten Radventile 40, 41, 42, 43 sind als pneumatisch schaltbare 2/2-Wege-Schaltventile ausgebildet.

Über das Umschaltventil 16 ist jeweils eine zu jedem der beiden Achsventile 22, 24 führende Hauptverbindungsleitung 18, 19 wechselweise mit einer in die Umgebung führenden drucklosen Entlüftungsleitung 20 oder mit einer an eine Druckluftquelle 8 angeschlossenen druckführenden Fülldruckleitung 13 verbindbar. Vorliegend ist die Fülldruckleitung 13 über ein Überströmventil 14 und ein Druckbegrenzungsventil 15 an die Druckluftquelle 8 angeschlossen, welche beispielhaft als eine Druckluftversorgungsanlage einer nicht näher dargestellten Druckluftbremsanlage des Kraftfahrzeugs ausgebildet ist. Die Druckluftbremsanlage 8 umfasst einen Kompressor 9, der über eine mit einer Trocknereinheit 11 versehene Förderdruckleitung 10 mit einem Eingangsanschluss eines Mehrkreisschutzventils 12 in Verbindung steht.

Die Fülldruckleitung 13 kann entweder alleine oder über die Versorgungsleitung eines Nebenverbraucherkreises an einen Ausgangsanschluss des Mehrkreisschutzventils 12 angeschlossen sein. Bei alleinigem Anschluss der Fülldruckleitung 13 an einem Ausgangsanschluss des Mehrkreisschutzventils 12 ist das Überströmventil 14 überflüssig, da die übrigen Verbraucherkreise dann durch das zugeordnete Überströmventil innerhalb des Mehrkreisschutzventils 12 gegenüber der Reifendruckregulierungsanlage 1.1 abgesichert sind. Wenn die Fülldruckleitung 13 dagegen an die Versorgungsleitung eines Nebenverbraucherkreises angeschlossen ist, ist in Fig. 1 vorhandene Überströmventil 14 zum Schutz des betreffenden Nebenverbraucherkreises vor einem Druckverlust innerhalb der Reifendruckregulierungsanlage 1.1 vorteilhaft vorhanden.

Im unbetätigten, also unbestromten Zustand des Umschaltventils 16, in der sich dieses in seiner Ruhestellung befindet, sind die beiden Hauptverbindungsleitungen 18, 19 mit der Entlüftungsleitung 20 verbunden, welche über einen Schalldämpfer 21 in die Umgebung führt. Im betätigten, also bestromten Zustand des Umschaltventils 16, in der dieses seine Schaltstellung einnimmt, sind die beiden Hauptverbindungsleitungen 18, 19 mit der Fülldruckleitung 13 verbunden.

Über die beiden Achsventile 22, 24 ist jeweils eine Achsverbindungsleitung 26, 27, die an der zugeordneten Fahrzeugachse 2, 3 jeweils in zwei äußere Radverbindungsleitungen 28, 29; 30, 31 verzweigt ist, wechselweise mit der zugeordneten Hauptverbindungsleitung 18, 19 verbindbar oder gegenüber dieser absperrbar. Im unbetätigten, also unbestromten Zustand der beiden Achsventile 22, 24, in der sich diese in ihrer Ruhestellung befinden, ist die jeweilige Achsverbindungsleitung 26, 27 gegenüber der zugeordneten Hauptverbindungsleitung 18, 19 abgesperrt. Im betätigten, also bestromten Zustand der Achsventile 22, 24, in der diese ihre Schaltstellung einnehmen, ist die jeweilige Achsverbindungsleitung 26, 27 mit der zugeordneten Hauptverbindungsleitung 18, 19 verbunden.

Als Bauteile einer Ventilanordnung 57 zur Erhöhung der Funktionssicherheit ist in den beiden Achsverbindungsleitungen 26, 27 jeweils ein Druckhalteventil 58, 59 angeordnet, mittels denen der Luftdruck in dem jeweiligen achsseitigen Abschnitt der betreffenden Achsverbindungsleitung 26, 27 selbsttätig auf einem vorgebbaren Mindestdruck gehalten wird. An den achsseitigen Abschnitt der Achsverbindungsleitungen 26, 27 ist jeweils ein Drucksensor 44, 46 angeschlossen, die über elektrische Sensorleitungen 45, 47 mit dem elektronischen Steuergerät 56 in Verbindung sind.

Die äußeren Radverbindungsleitungen 28, 29, 30, 31 sind über jeweils eine zweikanalige, vorzugsweise mit aufblasbaren Dichtungen versehene Drehkupplung 32, 33, 34, 35 von den beiden Fahrzeugachsen 2, 3 bis an die an den Fahrzeugrädern 4, 5, 6, 7 angeordneten Radventile 40, 41, 42, 43 geführt. Über die Radventile 40, 41, 42, 43 ist jeweils eine in den Innenraum des betreffenden, hier nicht näher dargestellten Radreifens führende innere Radverbindungsleitung 36, 37, 38, 39 wechselweise mit der zugeordneten äußeren Radverbindungsleitung 28, 29, 30, 31 verbindbar oder gegenüber dieser absperrbar. Im unbetätigten, also steuerdrucklosen Zustand der Radventile 40, 41, 42, 43, in der sich diese in ihrer Ruhestellung befinden, ist die jeweilige innere Radverbindungsleitung 36, 37, 38, 39 gegenüber der zugeordneten äußeren Radverbindungsleitung 28, 29, 30, 31 abgesperrt. Im betätigten, also steuerdruckbeaufschlagten Zustand der Radventile 40, 41, 42, 43, in der diese ihre Schaltstellung einnehmen, ist die jeweilige innere Radverbindungsleitung 36, 37, 38, 39 mit der zugeordneten äußeren Radverbindungsleitung 28, 29, 30, 31 verbunden.

Die Betätigung der Radventile 40, 41, 42, 43 erfolgt über das Vorsteuerventil 48, indem eine pneumatische Hauptsteuerleitung 51, an die über jeweils eine pneumatische Steuerverbindung in den Drehkupplungen 32, 33, 34, 35 an die Steuereingänge der Radventile 40, 41, 42, 43 führende pneumatische Radsteuerleitungen 52, 53, 54, 55 angeschlossen sind, wechselweise mit einem Entlüftungsausgang 50 oder mit der Fülldruckleitung 13 verbindbar ist.

Im unbetätigten, also unbestromten Zustand des Vorsteuerventils 48, in der sich dieses in seiner Ruhestellung befindet, ist die Hauptsteuerleitung 51 mit dem Entlüftungsausgang 50 verbunden und somit drucklos. Im betätigten, also bestromten Zustand des Vorsteuerventils 48, in der dieses seine Schaltstellung einnimmt, ist die Hauptsteuerleitung 51 mit der Fülldruckleitung 13 verbunden und somit druckführend. Das Überströmventil 14, das Druckbegrenzungsventil 15, das Umschaltventil 16, die beiden Achsventile 22, 24, das Vorsteuerventil 48 und die beiden Druckhalteventile 58, 59 sind in einem vormontierbaren Zentralventil 74.1 zusammengefasst.

Zum Befüllen der Radreifen der Fahrzeugräder 4, 5, 6, 7 wird das Umschaltventil 16 in seine Schaltstellung geschaltet, in der die Hauptverbindungsleitungen 18, 19 mit der Fülldruckleitung 13 verbunden sind. Zum Entleeren der Radreifen der Fahrzeugräder 4, 5, 6, 7 verbleibt das Umschaltventil 16 in seiner Ruhestellung, in welcher die beiden Hauptverbindungsleitungen 18, 19 mit der Entlüftungsleitung 20 verbunden sind. Anschließend werden die Achsventile 22, 24 derjenigen Fahrzeugachsen 2, 3, deren Radreifen befüllt oder entlüftet werden sollen, durch die Betätigung, also Bestromung der betreffenden Achsventile 22, 24 geöffnet und damit die betreffenden Achsverbindungsleitungen 26, 27 mit den zugeordneten Hauptverbindungsleitungen 18, 19 verbunden. Die Achsventile 22, 24 derjenigen Fahrzeugachsen 2, 3, bei denen die Reifendrücke unverändert bleiben sollen, verbleiben in ihrer unbetätigten, also stromlosen Ruhestellung, in welcher die betreffenden Achsverbindungsleitungen 26, 27 gegenüber den zugeordneten Hauptverbindungsleitungen 18, 19 abgesperrt sind. Zudem werden für das Befüllen und Entlüften der Radreifen alle Radventile 40, 41, 42, 43 geöffnet. Dies erfolgt durch die Betätigung, also die Bestromung des Vorsteuerventils 48, wodurch die pneumatische Hauptsteuerleitung 51 mit der Fülldruckleitung 13 verbunden und der in der Fülldruckleitung 13 vorliegende Luftdruck über die pneumatische Hauptsteuerleitung 51 und die Radsteuerleitungen 52, 53, 54, 55 sowie die Drehkupplungen 32, 33, 34, 35 als Steuerdruck bis an die Steuereingänge der Radventile 40, 41, 42, 43 durchgeschaltet wird. Durch die Beaufschlagung mit dem Steuerdruck werden die Radventile 40, 41, 42, 43 von ihrer geschlossenen Ruhestellung in ihre geöffnete Schaltstellung umgeschaltet, sodass eine durchgehende Verbindung zwischen den Innenräumen der Radreifen beider Fahrzeugachsen 2, 3 und, abhängig von der Schaltstellung des Umschaltventils 16, mit der Fülldruckleitung 13 oder der Entlüftungsleitung 20 besteht.

Da vorliegend beiden Fahrzeugachsen 2, 3 ein gemeinsames Umschaltventil 16 zugeordnet ist, kann der Reifendruck in den Radreifen der Vorderachse 2 und der Hinterachse 3 nur gleichzeitig erhöht oder abgesenkt werden. Falls eine unabhängige Regulierung des Reifendruckes in den Radreifen der Vorderachse 2 und der Hinterachse 3 erfolgen soll, ist für jede Fahrzeugachse 2, 3 ein separates, dem jeweiligen Achsventil 22, 24 vorgeschaltetes Umschaltventil erforderlich.

Durch die Druckhalteventile 58, 59 in den beiden Achsverbindungsleitungen 26, 27 wird der Luftdruck in dem jeweiligen achsseitigen Abschnitt der betreffenden Achsverbindungsleitung 26, 27 und damit auch in den angeschlossenen äußeren sowie inneren Radverbindungsleitungen 28, 29, 30, 31, 36, 37, 38, 39 selbsttätig auf einem vorgebbaren Mindestdruck gehalten. Dadurch ist ein vollständiger Druckverlust in den Radreifen der Fahrzeugräder 4, 5, 6, 7 unmöglich, der sonst, ausgelöst durch einen möglichen Elektronikdefekt in dem elektronischen Steuergerät 56, aufgrund einer ungewollten Umschaltung mindestens eines Achsventils 22, 24 und des Vorsteuerventils 48 beziehungsweise der Radventile 40, 41, 42, 43 auftreten könnte. Die Sicherheitsanforderungen an das elektronische Steuergerät 56 gemäß der Norm ISO 25119 sind somit entsprechend niedriger, welches mit Kostenvorteilen verbunden ist.

Der in den Radreifen der beiden Fahrzeugachsen 2, 3 vorliegende Reifendruck kann mittels der Drucksensoren 44, 46 erfasst und vom Steuergerät 56 überwacht werden, so dass eine Überfüllung oder Unterfüllung der Radreifen verhindert werden kann. Mittels der Drucksensoren 44, 46 kann der in den Radreifen vorliegende Reifendruck auch außerhalb von Verstellvorgängen, zum Beispiel während der Straßenfahrt oder während Arbeitseinsatzes abseits befestigter Straßen, überprüft werden, indem die Radventile 40, 41, 42, 43 bei geschlossenen Achsventilen 22, 24 kurzzeitig geöffnet und dann die in den Achsverbindungsleitungen 26, 27 vorliegenden Drücke erfasst werden.

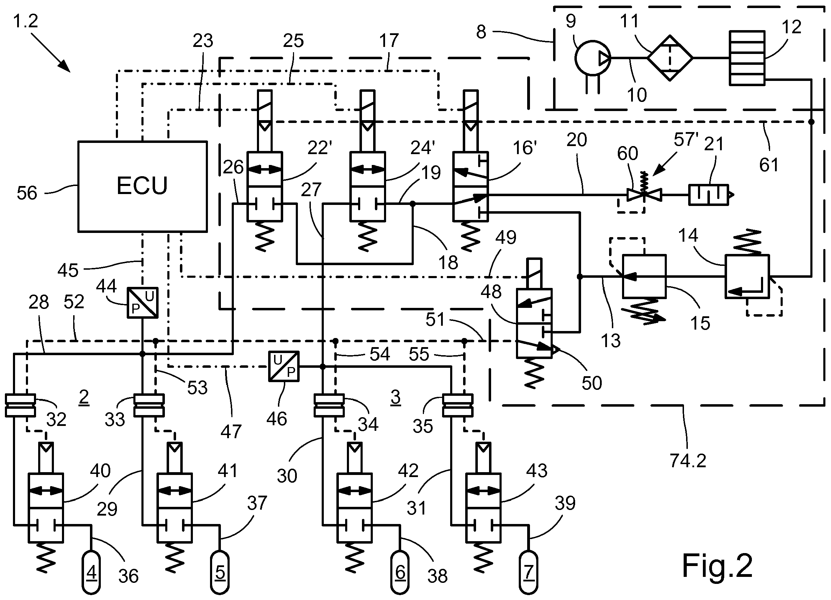

Im Unterschied zu der ersten Ausführungsform der Reifendruckregulierungsanlage 1.1 gemäß Fig. 1 weist eine in der schematischen Übersichtsdarstellung von Fig. 2 abgebildete zweite Ausführungsform einer erfindungsgemäßen Reifendruckregulierungsanlage 1.2 bei weitgehend identischer Funktionsweise eine Ventilanordnung 57' zur Erhöhung der Funktionssicherheit mit nur einem Druckhalteventil 60 auf. Dieses einzige Druckhalteventil 60 ist in der Entlüftungsleitung 20 angeordnet, wodurch der Luftdruck in dem inneren Abschnitt der Entlüftungsleitung 20, den beiden Hauptverbindungsleitungen 18, 19, den beiden Achsverbindungsleitungen 26, 27 sowie den äußeren und inneren Radverbindungsleitungen 28, 29, 30, 31, 36, 37, 38, 39 selbsttätig auf einem vorgebbaren Mindestdruck gehalten wird. Dadurch ist ebenfalls ein vollständiger Druckverlust in den Radreifen der Fahrzeugräder 4, 5, 6, 7 unmöglich, der sonst aufgrund einer ungewollten Umschaltung mindestens eines Achsventils 22', 24' und des Vorsteuerventils 48 beziehungsweise der Radventile 40, 41, 42, 43 auftreten könnte.

Das Umschaltventil 16' und die beiden Achsventile 22', 24' sind bei dem Ausführungsbeispiel gemäß Fig. 2 beispielhaft als elektromagnetisch-pneumatisch schaltbare Schaltventile ausgebildet, deren pneumatische Steuereingänge über eine gemeinsame Steuerdruckleitung 61 an den eingangsseitigen Abschnitt der Fülldruckleitung 13 angeschlossen sind. Aufgrund der pneumatischen Unterstützung ist für die Umschaltung des Umschaltventils 16' und der beiden Achsventile 22', 24' jeweils nur ein relativ niedriger Steuerstrom erforderlich. Das Überströmventil 14, das Druckbegrenzungsventil 15, das Umschaltventil 16', die beiden Achsventile 22', 24', das Vorsteuerventil 48 und das Druckhalteventil 60 sind in einem vormontierbaren Zentralventil 74.2 baulich zusammengefasst.

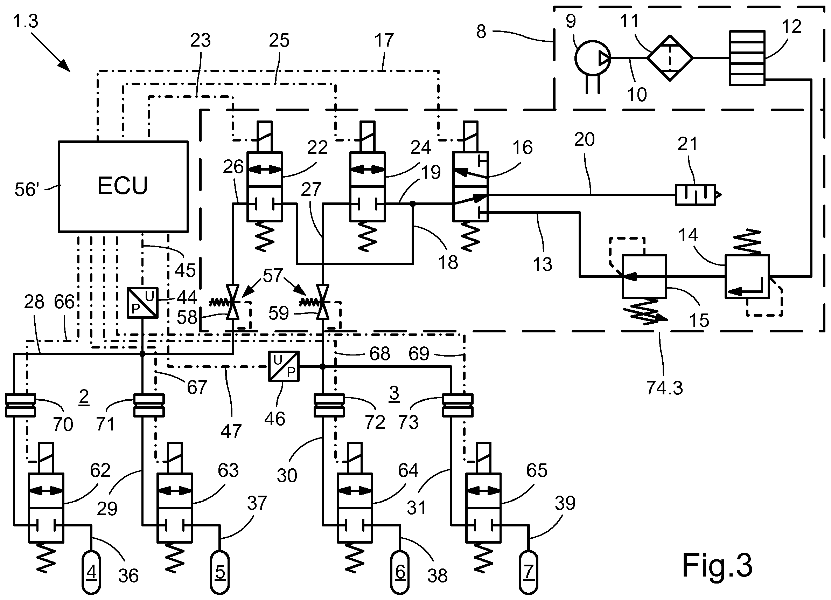

Eine in der schematischen Übersichtsdarstellung von Fig. 3 abgebildete dritte Ausführungsform einer Reifendruckregulierungsanlage 1.3 mit den Merkmalen der Erfindung unterscheidet sich von der ersten Ausführungsform der Reifendruckregulierungsanlage 1.1 gemäß Fig. 1 dadurch, dass die Radventile 62, 63, 64, 65 als elektromagnetisch schaltbare 2/2-Wege-Schaltventile ausgebildet sind. Jedem dieser Radventile 62, 63, 64, 65 ist eine elektrische Radsteuerleitung 66, 67, 68, 69 zugeordnet, die über eine elektrische Steuerverbindung in der jeweiligen Drehkupplung 70, 71, 72, 73 an das elektronische Steuergerät 56' angeschlossen sind. Die Radventile 62, 63, 64, 65 werden somit unmittelbar von dem Steuergerät 56' angesteuert und sind aufgrund der separaten Radsteuerleitungen 66, 67, 68, 69 unabhängig voneinander umschaltbar. Die weitere Funktionsweise der dritten Reifendruckregulierungsanlage 1.3 entspricht derjenigen der ersten Reifendruckregulierungsanlage 1.1 gemäß Fig. 1. Das Überströmventil 14, das Druckbegrenzungsventil 15, das Umschaltventil 16, die beiden Achsventile 22, 24 und die beiden Druckhalteventile 58, 59 sind in einem vormontierbaren Zentralventil 74.3 zusammengefasst.

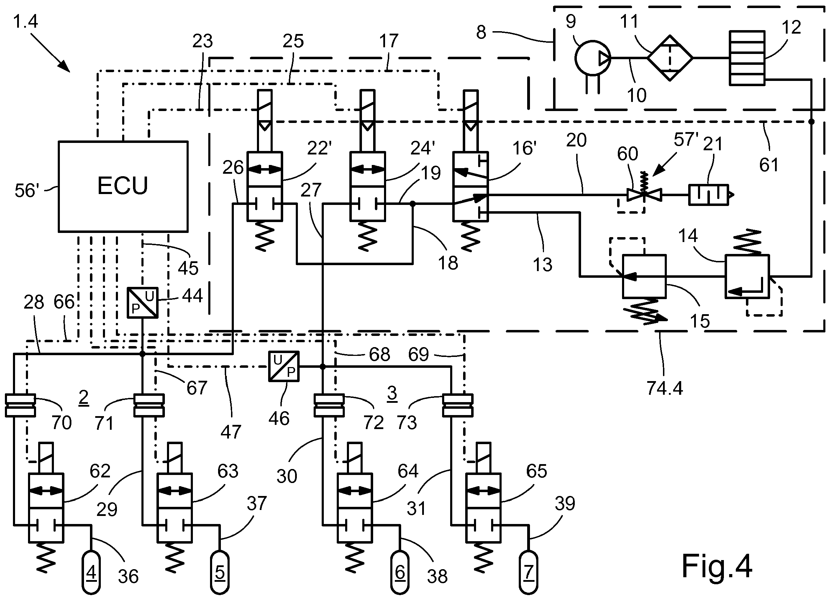

Eine in Fig. 4 abgebildete vierte Ausführungsform einer die Merkmale der Erfindung aufweisenden Reifendruckregulierungsanlage 1.4 unterscheidet sich von der zweiten Reifendruckregulierungsanlage 1.2 gemäß Fig. 2 ebenfalls dadurch, dass die Radventile 62, 63, 64, 65 wie bei der dritten Reifendruckregulierungsanlage 1.3 gemäß Fig. 3 als elektromagnetisch schaltbare 2/2-Wege-Schaltventile ausgebildet sind. Auch hier ist jedem Radventil 62, 63, 64, 65 eine elektrische Radsteuerleitung 66, 67, 68, 69 zugeordnet, die über eine elektrische Steuerverbindung in der jeweiligen Drehkupplung 70, 71, 72, 73 an das elektronische Steuergerät 56' angeschlossen sind. Somit werden die Radventile 62, 63, 64, 65 auch hier unmittelbar von dem Steuergerät 56' angesteuert und sind aufgrund der separaten Radsteuerleitungen 66, 67, 68, 69 unabhängig voneinander umschaltbar. Die weitere Funktionsweise der vierten Reifendruckregulierungsanlage 1.4 entspricht derjenigen der zweiten Reifendruckregulierungsanlage 1.2 gemäß Fig. 2. Das Überströmventil 14, das Druckbegrenzungsventil 15, das Umschaltventil 16', die beiden Achsventile 22', 24' und das Druckhalteventil 60 sind in einem vormontierbaren Zentralventil 74.4 baulich zusammengefasst.

### Bezugszeichenliste (Teil der Beschreibung)

- 1.1: Reifendruckregulierungsanlage (erste Ausführungsform)
- 1.2: Reifendruckregulierungsanlage (zweite Ausführungsform)
- 1.3: Reifendruckregulierungsanlage (dritte Ausführungsform)
- 1.4: Reifendruckregulierungsanlage (vierte Ausführungsform)
- 2: Fahrzeugachse, Vorderachse
- 3: Fahrzeugachse, Hinterachse
- 4: Fahrzeugrad, linkes Vorderrad
- 5: Fahrzeugrad, rechtes Vorderrad
- 6: Fahrzeugrad, linkes Hinterrad
- 7: Fahrzeugrad, rechtes Hinterrad
- 8: Druckluftquelle, Druckluftversorgungsanlage
- 9: Kompressor
- 10: Förderdruckleitung
- 11: Trocknereinheit
- 12: Mehrkreisschutzventil
- 13: Fülldruckleitung
- 14: Überströmventil
- 15: Druckbegrenzungsventil
- 16, 16': Umschaltventil
- 17: Elektrische Steuerleitung
- 18: Erste Hauptverbindungsleitung
- 19: Zweite Hauptverbindungsleitung
- 20: Entlüftungsleitung
- 21: Schalldämpfer
- 22, 22': Erstes Achsventil
- 23: Elektrische Steuerleitung
- 24, 24': zweites Achsventil
- 25: Elektrische Steuerleitung
- 26: Erste Achsverbindungsleitung
- 27: Zweite Achsverbindungsleitung
- 28: Erste äußere Radverbindungsleitung
- 29: Zweite äußere Radverbindungsleitung
- 30: Dritte äußere Radverbindungsleitung
- 31: Vierte äußere Radverbindungsleitung
- 32: Erste Drehkupplung
- 33: Zweite Drehkupplung
- 34: Dritte Drehkupplung
- 35: Vierte Drehkupplung
- 36: Erste innere Radverbindungsleitung
- 37: Zweite innere Radverbindungsleitung
- 38: Dritte innere Radverbindungsleitung
- 39: Vierte innere Radverbindungsleitung
- 40: Erstes Radventil
- 41: Zweites Radventil
- 42: Drittes Radventil
- 43: Viertes Radventil
- 44: Drucksensor
- 45: Sensorleitung
- 46: Drucksensor
- 47: Sensorleitung
- 48: Vorsteuerventil
- 49: Elektrische Steuerleitung
- 50: Entlüftungsausgang
- 51: Pneumatische Hauptsteuerleitung
- 52: Erste pneumatische Radsteuerleitung
- 53: Zweite pneumatische Radsteuerleitung
- 54: Dritte pneumatische Radsteuerleitung
- 55: Vierte pneumatische Radsteuerleitung
- 56, 56': Elektrisches Steuergerät, ECU
- 57, 57': Ventilanordnung
- 58: Erstes Druckhalteventil
- 59: Zweites Druckhalteventil
- 60: Druckhalteventil
- 61: Steuerdruckleitung
- 62: Erstes Radventil
- 63: Zweites Radventil
- 64: Drittes Radventil
- 65: Viertes Radventil
- 66: Erste elektrische Radsteuerleitung
- 67: Zweite elektrische Radsteuerleitung
- 68: Dritte elektrische Radsteuerleitung
- 69: Vierte elektrische Radsteuerleitung
- 70: Erste Drehkupplung
- 71: Zweite Drehkupplung
- 72: Dritte Drehkupplung
- 73: Vierte Drehkupplung
- 74.1: Zentralventil (erste Ausführungsform)
- 74.2: Zentralventil (zweite Ausführungsform)
- 74.3: Zentralventil (dritte Ausführungsform)
- 74.4: Zentralventil (vierte Ausführungsform)

## Patentansprüche

1. Reifendruckregulierungsanlage (1.1, 1.2, 1.3, 1.4), mittels der die Reifendrücke der Fahrzeugräder (4, 5, 6, 7) mehrerer Fahrzeugachsen (2, 3) eines luftbereiften Kraftfahrzeugs während der Fahrt verstellbar sind, aufweisend die folgenden Merkmale:
- mindestens ein elektromagnetisch schaltbares Umschaltventil (16, 16'), über das mindestens eine zu einem Achsventil (22, 24; 22', 24') einer Fahrzeugachse (2, 3) führende Hauptverbindungsleitung (18, 19) wechselweise mit einer in die Umgebung führenden Entlüftungsleitung (20) oder mit einer über ein Druckbegrenzungsventil (15) an eine Druckluftquelle (8) angeschlossenen Fülldruckleitung (13) verbindbar ist,
- ein jeder der Fahrzeugachsen (2, 3) zugeordnetes, elektromagnetisch schaltbares Achsventil (22, 24; 22', 24'), über das jeweils eine in äußere Radverbindungsleitungen (28, 29, 30, 31) der betreffenden Fahrzeugachse (2, 3) verzweigte Achsverbindungsleitung (26, 27) wechselweise mit der zugeordneten Hauptverbindungsleitung (18, 19) verbindbar oder gegenüber dieser absperrbar ist,
- ein an jedem Fahrzeugrad (4, 5, 6, 7) angeordnetes Radventil (40, 41, 42, 43; 62, 63, 64, 65), über das eine in den Innenraum des betreffenden Radreifens führende innere Radverbindungsleitung (36, 37, 38, 39) wechselweise mit der zugeordneten äußeren Radverbindungsleitung (28, 29, 30, 31) verbindbar oder gegenüber dieser absperrbar ist,
- zwischen den Fahrzeugachsen (2, 3) und den zugeordneten Fahrzeugrädern (4, 5, 6, 7) angeordnete zweikanalige Drehkupplungen (32, 33, 34, 35; 70, 71, 72, 73) mit jeweils einer Arbeitsverbindung zur Übertragung von Druckluft zwischen den fahrzeugrahmenseitigen und den radseitigen Abschnitten der äußeren Radverbindungsleitungen (28, 29, 30, 31) sowie mit einer Steuerverbindung zur Übertragung von Steuersignalen an die Radventile (40, 41, 42, 43; 62, 63, 64, 65) zwischen fahrzeugrahmenseitigen und radseitigen Abschnitten zugeordneter Radsteuerleitungen (52, 53, 54, 55; 66, 67, 68, 69), **gekennzeichnet durch**
- eine Ventilanordnung (57, 57'), mittels der eine vollständige Druckabsenkung des Luftdruckes in den Radreifen der Fahrzeugräder (4, 5, 6, 7) über das Umschaltventil (16, 16'), die Achsventile (22, 24; 22', 24') und die Radventile (40, 41, 42, 43; 62, 63, 64, 65) selbsttätig verhindert wird, wobei die Ventilanordnung (57) jeweils ein in jeder der Achsverbindungsleitungen (26, 27) angeordnetes Druckhalteventil (58, 59) umfasst, über das der Luftdruck in dem jeweiligen achsseitigen Abschnitt der betreffenden Achsverbindungsleitung (26, 27) selbsttätig auf einem vorgebbaren Mindestdruck gehalten wird, oder
dass die Ventilanordnung (57') ein in der Entlüftungsleitung (20) angeordnetes Druckhalteventil (60) umfasst, über das der Luftdruck in dem inneren Abschnitt der Entlüftungsleitung (20) selbsttätig auf einem vorgebbaren Mindestdruck gehalten wird.

2. Reifendruckregulierungsanlage nach Anspruch 1, **dadurch gekennzeichnet, dass** die Radventile (40, 41, 42, 43) als pneumatisch schaltbare 2/2-Wege-Schaltventile ausgebildet sind, dass jedem Radventil (40, 41, 42, 43) eine pneumatische Radsteuerleitung (52, 53, 54, 55) zugeordnet ist, die über eine pneumatische Steuerverbindung in der jeweiligen Drehkupplung (32, 33, 34, 35) an eine fahrzeugrahmenseitige pneumatische Hauptsteuerleitung (51) geführt ist, und dass die Hauptsteuerleitung (51) über ein elektromagnetisch schaltbares, als ein 3/2-Wege-Schaltventil ausgebildetes Vorsteuerventil (48) wechselweise mit einem Entlüftungsausgang (50) oder mit der Fülldruckleitung (13) verbindbar ist.

3. Reifendruckregulierungsanlage nach Anspruch 1, **dadurch gekennzeichnet, dass** die Radventile (62, 63, 64, 65) als elektromagnetisch schaltbare 2/2-Wege-Schaltventile ausgebildet sind, und dass jedem Radventil (62 - 65) eine elektrische Radsteuerleitung (66. 67, 68, 69) zugeordnet ist, die über eine elektrische Steuerverbindung in der jeweiligen Drehkupplung (70, 71, 72, 73) an ein elektronisches Steuergerät (56') angeschlossen ist.

4. Reifendruckregulierungsanlage nach einem der Ansprüche 1 bis 3, **dadurch gekennzeichnet, dass** die Fülldruckleitung (13) über ein Überströmventil (14), durch das die Fülldruckleitung (13) bei einem Druckverlust in einer der Achs- oder Radverbindungsleitungen (26, 27, 28, 29, 30, 31, 36, 37, 38, 39) oder in einem der Radreifen der Fahrzeugräder (4, 5, 6, 7) absperrbar ist, an die Druckluftquelle (8) angeschlossen ist.

5. Reifendruckregulierungsanlage nach einem der Ansprüche 1 bis 4, **dadurch gekennzeichnet, dass** das Druckbegrenzungsventil (15), das mindestens eine Umschaltventil (16; 16'), die Achsventile (22, 24; 22', 24') und die Druckhalteventile (58, 59) beziehungsweise das nur eine Druckhalteventil (60) sowie, sofern vorhanden, das Vorsteuerventil (48) und das Überströmventil (14) in einem vormontierbaren Zentralventil (74.1, 74.2, 74.3, 74.4) zusammengefasst sind.

## Claims

1. Tyre pressure regulating installation (1.1, 1.2, 1.3, 1.4) by means of which the tyre pressures of the vehicle wheels (4, 5, 6, 7) of a plurality of vehicle axles (2, 3) of a motor vehicle with pneumatic tyres are adjustable on the move, having the following features:
- at least one electromagnetically switchable changeover valve (16, 16') by way of which at least one main connection line (18, 19) that leads to an axle valve (22, 24; 22', 24') of a vehicle axle (2, 3) is alternatingly connectable to a ventilation line (20) that leads to the environment, or to a filling pressure line (13) that by way of a pressure control valve (15) is connected to a compressed air source (8);
- an electromagnetically switchable axle valve (22, 24; 22', 24') which is assigned to each of the vehicle axles (2, 3) and by way of which in each case one axle connection line (26, 27) which branches out into external wheel connection lines (28, 29, 30, 31) of the respective vehicle axle (2, 3) is alternatingly connectable to the assigned main connection line (18, 19) or blockable in relation to the latter;
- a wheel valve (40, 41, 42, 43; 62, 63, 64, 65) which is disposed on each vehicle wheel (4, 5, 6, 7) and by way of which an internal wheel connection line (36, 37, 38, 39) which leads into the interior of the respective wheel tyre is alternatingly connectable to the assigned external wheel connection line (28, 29, 30, 31) or blockable in relation to the latter;
- dual-channel rotary couplings (32, 33, 34, 35; 70, 71, 72, 73) which are disposed between the vehicle axles (2, 3) and the assigned vehicle wheels (4, 5, 6, 7) and which have in each case one operative connection for transmitting compressed air between the portions of the external wheel connection lines (28, 29, 30, 31) on the vehicle chassis and on the wheels, as well as having a control connection for transmitting control signals to the wheel valves (40, 41, 42, 43; 62, 63, 64, 65) between portions of assigned wheel control lines (52, 53, 54, 55; 66, 67, 68, 69) on the vehicle chassis and on the wheels,
**characterized by**
- a valve assembly (57, 57') by means of which a complete pressure reduction of the air pressure in the wheel tyres of the vehicle wheels (4, 5, 6, 7) by way of the changeover valve (16, 16'), the axle valves (22, 24; 22', 24') and the wheel valves (40, 41, 42, 43; 62, 63, 64, 65) is prevented in a self-acting manner, wherein the valve assembly (57) comprises in each case one pressure-sustaining valve (58, 59) which is disposed in each of the axle connection lines (26, 27) and by way of which the air pressure in the respective portion of the respective axle connection line (26, 27) on the axle is held in a self-acting manner at a predefinable minimum pressure; or
- in that the valve assembly (57') comprises a pressure-sustaining valve (60) which is disposed in the ventilation line (20) and by way of which the air pressure in the internal portion of the ventilation line (20) is held in a self-acting manner at a predefinable minimum pressure.

2. Tyre pressure regulating installation according to Claim 1, **characterized in that** the wheel valves (40, 41, 42, 43) are configured as pneumatically switchable 2/2-way changeover valves, **in that** each wheel valve (40, 41, 42, 43) is assigned one pneumatic wheel control line (52, 53, 54, 55) which by way of a pneumatic control connection in the respective rotary coupling (32, 33, 34, 35) is guided to a pneumatic main control line (51) on the vehicle chassis, and **in that** the main control line (51) by way of an electromagnetically switchable pilot control valve (48) which is configured as a 3/2-way changeover valve is alternatingly connectable to a ventilation exit (50) or to the filling pressure line (13).

3. Tyre pressure regulating installation according to Claim 1, **characterized in that** the wheel valves (62, 63, 64, 65) are configured as electromagnetically switchable 2/2-way changeover valves, and **in that** each wheel valve (62 - 65) is assigned an electric wheel control line (66, 67, 68, 69) which by way of an electric control connection in the respective rotary coupling (70, 71, 72, 73) is connected to an electronic control apparatus (56').

4. Tyre pressure regulating installation according to one of Claims 1 to 3, **characterized in that** the filling pressure line (13) by way of an overflow valve (14), by way of which the filling pressure line (13) is blockable in the event of a pressure loss in one of the axle or wheel connection lines (26, 27, 28, 29, 30, 31, 36, 37, 38, 39) or in one of the wheel tyres of the vehicle wheels (4, 5, 6, 7), is connected to the compressed air source (8).

5. Tyre pressure regulating installation according to one of Claims 1 to 4, **characterized in that** the pressure control valve (15), the at least one changeover valve (16; 16'), the axle valves (22, 24; 22', 24'), and the pressure-sustaining valves (58, 59), or the only one pressure-sustaining valve (60), respectively, as well as the pilot control valve (48) and the overflow valve (14), if and when present, are combined in one central valve (74.1, 74.2, 74.3, 74.4) which is capable of being pre-assembled.

## Revendications

1. Installation de réglage de pression des pneus (1.1, 1.2, 1.3, 1.4) à l'aide de laquelle les pressions de pneu des roues de véhicule (4, 5, 6, 7) de plusieurs essieux de véhicule (2, 3) d'un véhicule automobile à pneus pneumatiques peuvent être réglées pendant la conduite, comportant les caractéristiques suivantes :
- au moins une soupape d'inversion (16, 16') à commutation électromagnétique via laquelle au moins une conduite principale de liaison (18, 19) conduisant à une soupape d'essieu (22, 24 ; 22', 24') d'un essieu de véhicule (2, 3) peut être reliée alternativement à une conduite de purge (20) débouchant dans l'environnement ou à une conduite de pression de remplissage (13) raccordée à une source d'air comprimé (8) via une soupape de limitation de pression (15) ;
- une soupape d'essieu (22, 24 ; 22', 24') à commutation électromagnétique associée à chacun des essieux de véhicule (2, 3) via laquelle respectivement une conduite de liaison d'essieu (26, 27) se ramifiant en conduites de liaison de roue (28, 29, 30, 31) extérieures de l'essieu de véhicule (2, 3) concerné peuvent être reliées alternativement de façon ramifiée à la conduite principale de liaison (18, 19) associée ou être bloquées par rapport à elle ;
- une soupape de roue (40, 41, 42, 43 ; 62, 63, 64, 65) disposée au niveau de chaque roue de véhicule (4, 5, 6, 7) via laquelle une conduite de liaison de roue (36, 37, 38, 39) intérieure débouchant dans l'espace intérieur du pneu de roue concerné peut être reliée alternativement à la conduite de liaison de roue (28, 29, 30, 31) extérieure associée ou être bloquée par rapport à elle ;
- des joints tournants (32, 33, 34, 35 ; 70, 71, 72, 73) à deux canaux disposés entre les essieux de véhicule (2, 3) et les roues de véhicule (4, 5, 6, 7) avec respectivement une liaison de travail pour la transmission d'air comprimé entre les sections du côté du châssis du véhicule et les sections du côté de roue des conduites de liaison de roue (28, 29, 30, 31) extérieures ainsi qu'avec une liaison de commande pour la transmission de signaux de commande aux soupapes de roue (40, 41, 42, 43 ; 62, 63, 64, 65) entre les conduites de commande de roue (52, 53, 54, 55 ; 66, 67, 68, 69) associées entre les sections du côté du châssis du véhicule et les sections du côté de roue, **caractérisée :**
- **par** un agencement de soupape (57, 57') à l'aide duquel une réduction totale de pression de la pression d'air est empêchée automatiquement dans le pneu de roue des roues de véhicule (4, 5, 6, 7) via la soupape d'inversion (16, 16'), les soupapes d'essieu (22, 24 ; 22', 24') et les soupapes de roue (40, 41, 42, 43 ; 62, 63, 64, 65), l'agencement de soupape (57) comprenant respectivement une soupape de maintien de pression (58, 59) disposée dans chacune des conduites de liaison d'essieu (26, 27) via laquelle la pression d'air est maintenue automatiquement à une pression minimale prédéfinissable dans la section respective du côté d'essieu de la conduite de liaison d'essieu (26, 27) ;
ou
que l'agencement de soupape (57') comprend une soupape de maintien de pression (60) disposée dans la conduite de purge (20) via laquelle la pression d'air est maintenue automatiquement à une pression minimale prédéfinissable dans la section intérieure de la conduite de purge (20).

2. Installation de réglage de pression des pneus selon la revendication 1, **caractérisée en ce que** les soupapes de roue (40, 41, 42, 43) sont réalisées sous la forme de soupapes de commutation à 2/2 voies pouvant être commutées de façon pneumatique, qu'une conduite de commande de roue (52, 53, 54, 55) pneumatique est associée à chaque soupape de roue (40, 41, 42, 43) guidée via une liaison de commande pneumatique dans le joint tournant (32, 33, 34, 35) respectif au niveau d'une conduite principale de commande (51) du pneumatique du côté du châssis du véhicule et que la conduite principale de commande (51) peut être reliée alternativement à une sortie de purge (50) ou à la conduite de pression de remplissage (13) via une soupape de précommande (48) à commutation électromagnétique réalisée sous la forme d'une soupape de commutation à 3/2 voies.

3. Installation de réglage de pression des pneus selon la revendication 1, **caractérisée en ce que** les soupapes de roue (62, 63, 64, 65) sont réalisées sous la forme de soupapes de commutation à 2/2 voies à commutation électromagnétique et qu'une conduite de commande de roue électrique (66, 67, 68, 69) est associée à chaque soupape de roue (62 - 65), ladite conduite étant raccordée à un appareil de commande électronique (56') via une liaison de commande électrique dans le joint tournant (70, 71, 72, 73) respectif.

4. Installation de réglage de pression des pneus selon l'une quelconque des revendications 1 à 3, **caractérisée en ce que** la conduite de pression de remplissage (13) est raccordée à la source d'air comprimé (8) via une soupape de trop-plein (14) à travers laquelle la conduite de pression de remplissage (13) peut être bloquée en cas de perte de pression dans une des conduites de liaison d'essieu ou de roue (26, 27, 28, 29, 30, 31, 36, 37, 38, 39) ou dans un des pneus de roue des roues de véhicule (4, 5, 6, 7).

5. Installation de réglage de pression des pneus selon l'une quelconque des revendications 1 à 4, **caractérisée en ce que** la soupape de limitation de pression (15), l'au moins une soupape d'inversion (16 ; 16'), les soupapes d'essieu (22, 24 ; 22', 24') et la soupape de maintien de pression (60) et/ou les soupapes de maintien de pression (58, 59) ainsi que, si elles sont présentes, la soupape de précommande (48) et la soupape de trop-plein (14) sont regroupées dans une soupape centrale (74.1, 74.2, 74.3, 74.4) prémontable.
